# EUROPÄISCHE PATENTSCHRIFT

(11) **EP 1 528 378 B1**
(45) Veröffentlichungstag und Bekanntmachung des Hinweises auf die Patenterteilung: **01.10.2008**
(21) Anmeldenummer: 04025062.3
(22) Anmeldetag: 21.10.2004
(51) Int. Cl.: G01J 1/50, G01J 1/00

(54) **Dosimetrie mit Anwendung der circadiane Wirkungsfunktion**
Dosimetry using the circadian action spectrum
Dosimétrie utilisant le spectre d'action circadien

(30) Priorität: 27.10.2003 DE 10350053
(43) Veröffentlichungstag der Anmeldung: 04.05.2005
(73) Patentinhaber: Fraunhofer-Gesellschaft zur Förderung der angewandten Forschung e.V., 80686 München (DE)
(72) Erfinder: Gerlach, Sandra, Dr., 97082 Würzburg (DE); Römich, Hannelore, 97074 Würzburg (DE); Kockott, Dieter, Dr., 63456 Hanau (DE)

(56) Entgegenhaltungen:
- WO-A-95/20149
- FR-A- 2 769 979
- US-A1- 2001 019 110

## Beschreibung

Die Erfindung betrifft ein Verfahren und ein Dosimeter zur qualitativen und/oder quantitativen Bestimmung von Strahlung in einem für Lebewesen psychisch und/oder physisch wirksamen Wellenlängenbereich. Verwendung findet dieses Verfahren bei der Kontrolle der Belichtung von Lebewesen mit derartiger Strahlung sowie der Kontrolle von Beleuchtungsverhältnissen, z.B. am Arbeitsplatz.

Neben den bekannten Stäbchen und den Zapfen gibt es im Auge weitere Sensoren, die zwar am Sehvorgang nicht beteiligt sind, aber den Hell-Dunkel-Rhythmus registrieren. Es konnte geklärt werden, auf welchen spektralen Bereich diese Neuronen besonders stark ansprechen. Die lichtempfindlichen Sensoren dienen der Weiterleitung von Hell-Dunkel-Signalen optischer Reize an die Hypophyse und beeinflussen so die Melatonin-Ausschüttung im Körper. Die Melatoninkonzentration wird neben vielen neurologischen Erkrankungen ("depression marker") auch für Störungen im Tag-Nacht-Rhythmus verantwortlich gemacht. Mit der messtechnischen Erfassung der circadianen Wirkungsfunktion konnte erstmals der Bereich des Spektrums ausgemacht werden, der den circadianen Rhythmus des Menschen (Tag-Nacht-Rhythmus) bestimmt (Thapan K., J. Physiology 535, 2001, 1, 261-7; Brainhard G. C., J. Neuroscience 21, 2001, 16, 6405-12; Gall D., LICHT 54, 2002, 11-12, 1292-7.

Fällt nicht ausreichend und vor allem nicht Licht der entsprechenden psychologisch und physiologisch wirksamen Quantenenergie auf diese sensitiven Neuronen, so kann dies zu einer Störung des Melatonin-Haushalts führen, was sich ungünstig auf das mentale/psychische Befinden des Menschen auswirkt. Mögliche Folgen einer Unterversorgung sind Schlafstörungen, Depressionen oder andere psychische Krankheiten. Besonders deutlich erkennbar wird dieser Zusammenhang bei der Untersuchung des Phänomens der "Winterdepression", welche eben gerade gehäuft in den lichtarmen Wintermonaten diagnostiziert wird. Nach einer Statistik des Arbeitsministeriums in Nordrhein-Westfalen gehen 27 % aller Meldungen von Berufsunfähigkeit auf psychische Erkrankungen zurück, wobei in einer großen Zahl der Fälle der Melatonin-Regelmechanismus dafür verantwortlich gemacht wird.

Physikalische Messgeräte wie Radiometer und Luxmeter, die kontinuierlich die Beleuchtungsstärke messen und, wenn sie mit einer Integrationseinheit ausgerüstet sind, auch die Beleuchtung (Dosis) erfassen können, sind auf dem Markt erhältlich. Soll die Beleuchtungssituation in einem Raum vermessen werden, so benötigt man eine Vielzahl solcher Geräte, um die an verschiedenen Stellen des Raumes wechselnden Lichtverhältnisse zu bewerten. Da sich die Beleuchtung im Tagesrhythmus und im Wechsel der Jahreszeiten ändert, sind lange Messzeiten notwendig. Der technische Aufwand und die Kosten sind entsprechend hoch.

Stationäre Messungen mit Radiometern an Personen sind kaum möglich, da sich diese in ständig wechselnder Position zur Strahlungsquelle befinden.

Als Alternative zur gerätetechnischen Erfassung der Beleuchtungsbedingungen können Dosimeter eingesetzt werden. In diesem Zusammenhang bezieht sich der Begriff Dosimeter auf Messeinrichtungen, die sich durch den Einfluss der Umgebung verändern und deren Änderung der Eigenschaft (z.B. der Farbe, Dichte, Leitfähigkeit) visuell beurteilt oder gemessen werden kann. Hier einige Beispiele:
- Personendosimeter, die auf natürliche oder künstliche UV-Strahlung ansprechen, bestehen aus Polysulphonfolien, die unter UV-Exposition einen Anstieg der Extinktion bei 330 nm zeigen (Kockott D. et al., CIE technical report, 1992). Ein Dosimeter für UV-Strahlung das eine Farbänderung bei Bestrahlung zeigt ist aus US 2001/0019110 A1 bekannt.
- Als Frühwarnsystem für Lichtschäden an Kunstwerken werden Dosimeter eingesetzt, die aus lichtempfindlichen Substanzen bestehen, die in ein Polyvinylacetat eingebettet und auf Papier aufgetragen werden (WO 00/22389). Lichtdosimeter, die für Museen entwickelt wurden, haben keinen Bezug zu physiologisch wirksamen Substanzen oder der Bewertung der Wirkung von Licht auf Lebewesen.

Ausgehend hiervon war es Aufgabe der vorliegenden Erfindung, ein Verfahren und hiermit verbunden eine Vorrichtung bereitzustellen, mit der auf einfache Weise die Bestrahlung von Lebewesen kontrolliert und die Beleuchtungsverhältnisse an bestimmten Orten charakterisiert werden kann.

Diese Aufgabe wird durch das erfindungsgemäße Verfahren mit den Merkmalen des Anspruchs 1 sowie das erfindungsgemäße Dosimeter mit den Merkmalen des Anspruchs 11 gelöst. Die weiteren abhängigen Ansprüche zeigen vorteilhafte Weiterbildungen auf. In den Ansprüchen 20 bis 22 werden exemplarische Verwendungen des erfindungsgemäßen Verfahrens definiert.

Erfindungsgemäß wird ein Verfahren zur qualitativen und/oder quantitativen Bestimmung von Strahlung in einem für Lebewesen psychisch und/oder physisch wirksamen Längenwellenbereich bereitgestellt. Dieses basiert auf der Exposition eines in den betreffenden Wellenlängenbereich selektiven Indikators und der anschließenden Auswertung der Eigenschaftsänderung des Indikators.

Das neue Verfahren dient somit der direkten, spektralen und zeitlich integrierenden Wertung von komplexen Beleuchtungsbedingungen. Damit wird eine weitere Erforschung des Lichteinflusses auf unser mentales Befinden durch ein einfaches System ermöglicht. Neue Impulse für die Lichttherapie und die Behandlung von psychisch Kranken sowie für die Optimierung von Arbeitsplätzen oder für eine förderliche Beleuchtung von Brutplätzen für Tiere sind damit möglich.

Bei der Wirkung von Licht auf Lebewesen handelt es sich um einen relativ langsamen Vorgang. Somit ist es zweckmäßig, das Dosimeter so lange zu exponieren, bis merkliche oder spektroskopisch leicht nachweisbare Veränderungen hervorgerufen werden. Dies kann im Einzelfall innerhalb von wenigen Tagen geschehen oder bei niedriger Beleuchtungsstärke einige Monate erfordern. Durch Steuerung der Reaktivität des Dosimeters sind sowohl Kurzzeitmessungen als auch Langzeitüberwachungen möglich. Dies kann über die Art des Indikators, die Einbettung des Indikators in eine Matrix oder über wellenlängenabhängig absorbierende Filter erfolgen.

Als Indikator werden Farbstoffe, Pigmente und/oder andere Substanzen verwendet, deren spektrale Empfindlichkeit dabei auf die circadiane Wirkungsfunktion ausgerichtet ist. Beispiele für bevorzugte Farbstoffe sind Auramin, Bismarckbraun, Safranin, Fettbraun, Melanilgelb, Naphtolgelb, Thiazolgelb, Sudanorange, Orange G und Chinilingelb.

Die circadiane Wirkungsfunktion ist aus der Literatur bekannt (Gall D., Licht 54, 2002, 11-12, 1292). Das Verfahren ist gezielt auf den psychisch wirksamen Bereich des circadianen Rhythmus abgestellt. Dies bedeutet, dass sich das Dosimeter dann verfärbt, ausbleicht oder verändert, sobald Strahlung dieser psychisch wirksamen Wellenlänge auftritt. Bei fehlender Strahlung dieser Wellenlänge findet demnach keine Eigenschaftsänderung des Dosimeters statt.

Vorzugsweise weist der Indikator ein Maximum seiner spektralen Empfindlichkeit bei ca. 450 nm auf.

In einer vorteilhaften Weiterbildung des erfindungsgemäßen Verfahrens kann der Indikator in eine Matrix eingebettet werden. Als Matrix kommen Substanzen in Frage, die im betroffenen Wellenlängenbereich für das Licht durchlässig sind. Hierunter fallen beispielsweise verschiedene Polymertypen, z.B. Polyacrylate, Polyvinylacetate oder Polysiloxane.

Es besteht aber auch die Möglichkeit, dass der Indikator direkt auf Substrat aufgebracht wird. Als bevorzugte Substrate kommen dabei Glas, Papier und/oder Kunststoff zur Anwendung.

Vorzugsweise wird die spektrale Empfindlichkeit des Indikators durch dessen Schichtdicke, durch Verbundbildung mit anderen Komponenten oder durch Verwendung von Filtern, die die Strahlung außerhalb des Wellenlängenbereichs der circadianen Wirkungsfunktion absorbieren, eingestellt. Die Filter sind dabei vorzugsweise so ausgestaltet, dass die Wellenlängen unterhalb von 400 nm (hypochromer Bereich) und oberhalb von 550 nm (bathochromer Bereich) ausgeblendet werden.

Die Auswertung kann in einer Variante mittels spektroskopischer Methoden, z.B. IR- oder UV-vis-Spektroskopie erfolgen. In einer weiteren Variante ist es aber auch möglich, dass die Auswertung alleine visuell, z.B. anhand einer Farbskala, erfolgt.

Erfindungsgemäß wird ebenso ein Dosimeter zur qualitativen und/oder quantitativen Bestimmung von Strahlung in einem für Lebewesen psychisch wirksamen Wellenlängenbereich bereitgestellt, das einen in dem betreffenden Wellenlängenbereich selektiven Indikator aufweist.

Verwendung findet das erfindungsgemäße Verfahren zur Kontrolle der Belichtung von Lebewesen mit psychisch wirksamer Strahlung, z.B. von Menschen (Personendosimeter). Dieses ist in allen Bereich des privaten und beruflichen Lebens einsetzbar. Betrachtet man eine zu bestimmende Bestrahlungszeit t, lässt sich mit Hilfe der Eigenschaftsänderung am Dosimeter ablesen, ob die betreffende Person oder Lebewesen eine ausreichende Dosis circadian wirksames Licht empfangen hat.

Eine weitere Verwendungsmöglichkeit besteht in der Kontrolle der Beleuchtungssituation im Innen- wie im Außenbereich. So kann die Beleuchtungssituation in Innenräumen, z.B. zur Kontrolle von Lampen und Leuchten, eingesetzt werden, während im Außenbereich beispielsweise die Bewertung der jahreszeitlichen Schwankungen von Licht und deren Einfluss auf Lebewesen untersucht werden können. Beim Einsatz der erfindungsgemäßen Dosimeter zur Überwachung der Beleuchtungsverhältnisse in einem Innenraum, können so beispielsweise Aussagen darüber getroffen werden, inwieweit der Aufenthaltsort für Lebewesen günstige bzw. ungünstige Bedingungen darstellt.

Anhand der folgenden Figur und des folgenden Beispiels soll der erfindungsgemäße Gegenstand näher erläutert werden, ohne diesen dadurch einschränken zu wollen.

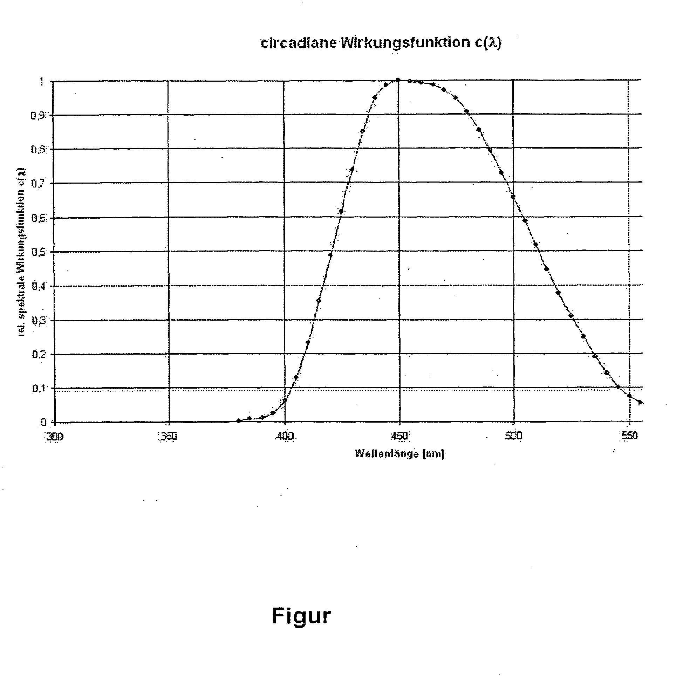

Die Figur zeigt die circadiane Wirkungsfunktion nach Gall (Gall D., Licht 54, 2002, 11-12, 1292) unter Verwendung der Daten von Brainhard G. C., J. Neuroscience 21, 2001, 16, 6405) und Thapan (Thapan K., J. Physiology 535, 2001, 1, 261).

### Beispiel

Entscheidend für die Konzeptionierung des Dosimeters zur Bewertung der Lichtverhältnisse am Arbeitsplatz ist der Verlauf der relativen spektralen Empfindlichkeit des wirksamen Farbstoffes. Durch Bestimmung dieser Größe für ausgewählte Farbstoffe lässt sich ein geeignetes Indikatormaterial finden. Der spektrale Bereich lässt sich zudem durch geeignete Filter optimieren, falls der Farbstoff einen breiteren spektralen Bereich umfasst. Neben dem Farbstoff selbst muss auch eine günstige/passende Konzentration des Farbstoffs bestimmt werden. Entscheidenden Einfluss auf die Sensitivität des Dosimeters hat neben dem Farbstoff selbst auch die Matrix, die als Trägermaterial fungiert. In der Entwicklung des Lichtdosimeters für den musealen Bereich konnte gezeigt werden, dass sich die Lichtsensitivität der Farbschichten durch Variation der Matrix optimal einstellen lässt.

Als Substrat kann ein einfacher und damit kostengünstiger Objektträger aus Glas, der durch Schleuderbeschichtung serienmäßig zu beschichten und mit einer einheitlichen Rückseite zu versehen ist, verwendet werden.

## Patentansprüche

1. Verfahren zur qualitativen und/oder quantitativen Bestimmung von Strahlung in dem für Lebewesen psychisch und/oder physisch wirksamen circadianen Wellenlängenbereich durch Exposition eines in dem betreffenden Wellenlängenbereich selektiven Indikators und anschließende Auswertung der Eigenschaftsänderung des Indikators,
wobei als Indikator Farbstoffe, Pigmente und/oder andere Substanzen mit spektraler Empfindlichkeit eingesetzt werden und die spektrale Empfindlichkeit des Indikators auf die circadiane Wirkungsfunktion ausgerichtet ist.

2. Verfahren nach Anspruch 1,
**dadurch gekennzeichnet, dass** das Maximum der spektralen Empfindlichkeit des Indikators bei ca. 450 nm liegt.

3. Verfahren nach einem der Ansprüche 1 oder 2,
**dadurch gekennzeichnet, dass** der Indikator in eine Matrix eingebettet ist.

4. Verfahren nach Anspruch 3,
**dadurch gekennzeichnet, dass** als Matrix eine Polymermatrix, z.B. aus Polyacrylaten, Polyvinylacetaten oder Polysiloxanen, verwendet wird.

5. Verfahren nach einem der Ansprüche 1 bis 4,
**dadurch gekennzeichnet, dass** der Indikator auf einem Substrat aufgebracht wird.

6. Verfahren nach Anspruch 5,
**dadurch gekennzeichnet, dass** als Substrat Glas, Papier, und/oder Kunststoff verwendet wird.

7. Verfahren nach einem der Ansprüche 1 bis 6,
**dadurch gekennzeichnet, dass** die spektrale Empfindlichkeit des Indikators durch dessen Schichtdicke, durch Verbundbildung mit anderen Komponenten oder durch Verwendung Filtern, die die Strahlung außerhalb der circadianen Wirkungsfunktion absorbieren, eingestellt wird.

8. Verfahren nach Anspruch 7,
**dadurch gekennzeichnet, dass** die Filter Strahlung im Wellenlängenbereich unterhalb von 400 nm und oberhalb von 550 nm absorbieren.

9. Verfahren nach einem der Ansprüche 1 bis 8,
**dadurch gekennzeichnet, dass** die Auswertung mittels spektroskopischer Methoden, z.B. IR- oder UV-vis-Spektroskopie erfolgt.

10. Verfahren nach einem der Ansprüche 1 bis 9,
**dadurch gekennzeichnet, dass** die Auswertung visuell anhand einer Farbskala erfolgt.

11. Dosimeter zur qualitativen und/oder quantitativen Bestimmung von Strahlung in dem für Lebewesen psychisch wirksamen circadianen Wellenlängenbereich enthaltend einen in diesem Wellenlängenbereich selektiven Indikator,
wobei der Indikator ein Farbstoff, Pigment und/oder eine andere Substanz mit spektraler Empfindlichkeit ist und die spektrale Empfindlichkeit des Indikators auf die circadiane Wirkungsfunktion ausgerichtet ist.

12. Dosimeter nach Anspruch 11,
**dadurch gekennzeichnet, dass** das Maximum der spektralen Empfindlichkeit des Indikators bei ca. 450 nm liegt.

13. Dosimeter nach einem der Ansprüche 11 oder 12,
**dadurch gekennzeichnet, dass** der Indikator in eine Matrix eingebettet ist.

14. Dosimeter nach einem der Ansprüche 11 bis 13,
**dadurch gekennzeichnet, dass** die Matrix aus einer Polymermatrix, z.B. aus Polyacrylaten, Polyvinylacetaten, Polystyrolen oder Polysiloxanen, besteht.

15. Dosimeter nach einem der Ansprüche 11 bis 14,
**dadurch gekennzeichnet, dass** der Indikator auf einem Substrat aufgebracht ist.

16. Dosimeter nach Anspruch 15,
**dadurch gekennzeichnet, dass** das Substrat ausgewählt ist aus der Gruppe Glas, Papier und Kunststoff.

17. Dosimeter nach einem der Ansprüche 11 bis 16,
**dadurch gekennzeichnet, dass** die Empfindlichkeit des Indikators durch dessen Schichtdicke, durch Abmischen mit anderen Komponenten oder durch Verwendung Filtern, die die Strahlung außerhalb der circadianen Wirkungsfunktion absorbieren, einstellbar ist.

18. Dosimeter nach einem der Ansprüche 11 bis 17,
**dadurch gekennzeichnet, dass** der Indikator visuell, z.B. mittels einer Referenzskala, auswertbar ist.

19. Dosimeter nach einem der Ansprüche 11 bis 18,
**dadurch gekennzeichnet, dass** der Indikator mittels IR- oder UV-vis-Spektroskopie auswertbar ist.

20. Verwendung des Verfahrens nach einem der Ansprüche 1 bis 10 zur Kontrolle der Belichtung von Lebewesen mit psychisch und/oder physisch wirksamer Strahlung.

21. Verwendung des Verfahrens nach einem der Ansprüche 1 bis 10 zur Kontrolle der Beleuchtungsverhältnisse im Innen- und Außenbereich.

22. Verwendung nach Anspruch 21 zur Kontrolle der Beleuchtungsverhältnisse an Arbeitsplätzen, zur Bewertung von Geräten, Empfehlung für Lichttherapie und/oder Normierung.

## Claims

1. Method for qualitative and/or quantitative determination of radiation in the circadian wavelength range which is psychically and/or physically effective for living things, by exposure of an indicator which is selective in the relevant wavelength range and subsequent evaluation of the property change of the indicator,
colourants, pigments and/or other substances with spectral sensitivity being used as indicator and the spectral sensitivity of the indicator being geared to the circadian action function.

2. Method according to claim 1,
**characterised in that** the maximum of the spectral sensitivity of the indicator is at approximately 450 nm.

3. Method according to one of the claims 1 or 2,
**characterised in that** the indicator is embedded in a matrix.

4. Method according to claim 3,
**characterised in that** a polymer matrix is used as matrix, for example made of polyacrylates, polyvinyl acetates or polysiloxanes.

5. Method according to one of the claims 1 to 4,
**characterised in that** the indicator is applied on a substrate.

6. Method according to claim 5,
**characterised in that** glass, paper and/or plastic material is used as substrate.

7. Method according to one of the claims 1 to 6,
**characterised in that** the spectral sensitivity of the indicator is adjusted by the layer thickness thereof, by composite formation with other components or by the use of filters which absorb the radiation which is outwith the circadian action function.

8. Method according to claim 7,
**characterised in that** the filters absorb radiation in the wavelength range below 400 nm and above 550 nm.

9. Method according to one of the claims 1 to 8,
**characterised in that** the evaluation is effected by means of spectroscopic methods, e.g. IR- or UV-vis spectroscopy.

10. Method according to one of the claims 1 to 9,
**characterised in that** the evaluation is effected visually by means of a colour scale.

11. Dosimeter for qualitative and/or quantitative determination of radiation in the circadian wavelength range which is psychically effective for living things, containing an indicator which is selective in this wavelength range,
the indicator being a colourant, pigment and/or another substance with spectral sensitivity and the spectral sensitivity of the indicator being geared to the circadian action function.

12. Dosimeter according to claim 11,
**characterised in that** the maximum of the spectral sensitivity of the indicator is at approximately 450 nm.

13. Dosimeter according to one of the claims 11 or 12,
**characterised in that** the indicator is embedded in a matrix.

14. Dosimeter according to one of the claims 11 to 13,
**characterised in that** the matrix comprises a polymer matrix, for example polyacrylates, polyvinyl acetates, polystyrenes or polysiloxanes.

15. Dosimeter according to one of the claims 11 to 14,
**characterised in that** the indicator is applied on a substrate.

16. Dosimeter according to claim 15,
**characterised in that** the substrate is selected from the group glass, paper and plastic material.

17. Dosimeter according to one of the claims 11 to 16,
**characterised in that** the sensitivity of the indicator can be adjusted by the layer thickness thereof, by mixing with other components or by the use of filters which absorb the radiation which is outwith the circadian action function.

18. Dosimeter according to one of the claims 11 to 17,
**characterised in that** the indicator can be evaluated visually, e.g. by means of a reference scale.

19. Dosimeter according to one of the claims 11 to 18,
**characterised in that** the indicator can be evaluated by means of IR- or UV-vis spectroscopy.

20. Use of the method according to one of the claims 1 to 10, for checking the illumination of living things with psychically and/or physically effective radiation.

21. Use of the method according to one of the claims 1 to 10, for checking the lighting conditions indoors and outdoors.

22. Use according to claim 21, for checking the lighting conditions in workplaces, for evaluating apparatus, recommendation for light therapy and/or normalisation.

## Revendications

1. Procédé de détermination qualitative et/ ou quantitative du rayonnement dans une plage d'action de spectre circadien à effet psychique et/ou physique sur des êtres vivants, par exposition d'un indicateur sélectif pour la plage des longueurs d'onde concernées et exploitation consécutive de la variation de propriété de l'indicateur,
les indicateurs utilisés étant des colorants, des pigments et/ou autres substances à sensibilité spectrale et
la sensibilité spectrale de l'indicateur est orientée vers le spectre d'action circadien.

2. Procédé selon la revendication 1,
**caractérisé en ce que**
le maximum de la sensibilité spectrale de l'indicateur se situe à environ 450 nm.

3. Procédé selon l'une des revendications 1 ou 2,
**caractérisé en ce que**
l'indicateur est intégré dans une matrice.

4. Procédé selon la revendication 3,
**caractérisé en ce que**
la matrice est une matrice de polymère, par exemple de polyacrylates, de poly-vinyle-acétates ou de poly-siloxanes.

5. Procédé selon l'une des revendications 1 à 4,
**caractérisé en ce que**
l'indicateur est appliqué sur un substrat.

6. Procédé selon la revendication 5,
**caractérisé en ce que**
le substrat est du verre, du papier et/ ou une matière plastique.

7. Procédé selon l'une des revendications 1 à 6,
**caractérisé en ce que**
la sensibilité spectrale de l'indicateur se règle par l'épaisseur de sa couche, par la formation de composés avec d'autres composants ou par l'utilisation de filtres qui absorbent le rayonnement extérieur au spectre d'action circadien.

8. Procédé selon la revendication 7,
**caractérisé en ce que**
les filtres absorbent des rayonnements dans la plage des longueurs d'onde inférieures à 400 nm et supérieures à 550 nm.

9. Procédé selon l'une des revendications 1 à 8,
**caractérisé en ce que**
l'exploitation se fait à l'aide de procédés spectroscopiques par exemple par spectroscopie infrarouge (IR) ou ultraviolette (UV).

10. Procédé selon l'une des revendications 1 à 9,
**caractérisé en ce que**
l'exploitation se fait de manière visuelle à l'aide d'une échelle de teinte.

11. Dosimètre pour la détermination qualitative et/ ou quantitative du rayonnement dans une plage d'action du spectre circadien sur des êtres vivants, comportant un indicateur sélectif dans cette plage de longueurs d'onde,
l'indicateur étant un colorant, un pigment et/ou une autre substance à sensibilité spectrale et la sensibilité spectrale de l'indicateur est dirigée en fonction du spectre d'action circadien.

12. Dosimètre selon la revendication 11,
**caractérisé en ce que**
le maximum de la sensibilité spectrale de l'indicateur se situe à environ 450 nm.

13. Dosimètre selon l'une des revendications 11 ou 12,
**caractérisé en ce que**
l'indicateur est intégré dans une matrice.

14. Dosimètre selon l'une des revendications 11 à 13,
**caractérisé en ce que**
la matrice est une matrice de polymère, par exemple de polyacrylates, de poly-vinyle-acétates, de polystyrènes ou de poly-siloxanes.

15. Dosimètre selon l'une des revendications 11 à 14,
**caractérisé en ce que**
l'indicateur est appliqué sur un substrat.

16. Dosimètre selon la revendication 15,
**caractérisé en ce que**
le substrat est choisi dans le groupe formé par le verre, le papier et les matières plastiques.

17. Dosimètre selon l'une des revendications 11 à 16,
**caractérisé en ce que**
l'on règle la sensibilité de l'indicateur par l'épaisseur de sa couche, en mélangeant avec d'autres composants ou en utilisant des filtres qui absorbent le rayonnement extérieur au spectre d'action circadien.

18. Dosimètre selon l'une des revendications 11 à 17,
**caractérisé en ce que**
l'indicateur est visuel, il est exploité par exemple par une échelle de référence.

19. Dosimètre selon l'une des revendications 11 à 18,
**caractérisé en ce que**
l'indicateur est exploité par spectroscopie infrarouge (IR) ou ultraviolette (UV).

20. Application du procédé selon l'une des revendications 1 à 10, pour le contrôle de l'éclairage d'êtres vivants avec un rayonnement à effet psychique et/ ou physique.

21. Utilisation du procédé selon l'une des revendications 1 à 10 pour contrôler les conditions d'éclairage à l'intérieur et à l'extérieur.

22. Utilisation selon la revendication 21 pour le contrôle des conditions d'éclairage de postes de travail, pour l'exploitation d'appareils, pour faire des recommandations de photothérapie et/ou pour la normalisation.
